(19) Europäisches Patentamt
European Patent Office
Office européen des brevets

(11) Publication number: 0 045 126 B1

(12) EUROPEAN PATENT SPECIFICATION

(45) Date of publication of patent specification: 05.12.84

(51) Int. Cl.³: C 01 B 3/40, B 01 J 37/02

(21) Application number: 81302484.1

(22) Date of filing: 04.06.81

# (54) Catalytic process for producing hydrogen.

(30) Priority: 25.06.80 GB 8020713
30.06.80 GB 8021395

(43) Date of publication of application:
03.02.82 Bulletin 82/05

(45) Publication of the grant of the patent:
05.12.84 Bulletin 84/49

(84) Designated Contracting States:
BE DE FR GB IT NL

(56) References cited:
DE-A-2 359 451
DE-A-2 418 403
DE-A-2 423 086
DE-B-2 454 846
FR-A-2 375 138
GB-A-1 513 544
US-A-4 089 941
US-A-4 233 187

**The file contains technical information submitted after the application was filed and not included in this specification**

(73) Proprietor: IMPERIAL CHEMICAL INDUSTRIES PLC
Imperial Chemical House Millbank
London SW1P 3JF (GB)

(72) Inventor: Twigg, Martyn Vincent
30 Valley Drive
Yarm Cleveland (GB)
Inventor: Irvine, Elizabeth Anne
31 Campion Drive
Guisborough Cleveland (GB)

(74) Representative: Chapman, Kenneth Hazel et al
Imperial Chemical Industries PLC Legal
Department: Patents Po Box 6
Welwyn Garden City Herts, AL71HD (GB)

EP 0 045 126 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to a catalytic process, particularly for the production of hydrogen by gaseous phase reaction of a carbonaceous feedstock with steam or, where appropriate, carbon dioxide.

Catalysts for such processes have most commonly been supported on a refractory material such as alumina or hydraulic cement. They should be mechanically strong to avoid damage during loading of the catalyst bed and during use and should also have a high surface area and porosity for optimum catalytic activity. To minimise the pressure drop across the bed, the catalyst is preferably formed in shaped pieces such as hollow cylinders, and more recently it has been proposed to make such cylinders with relatively thin walls and internal reinforcing partitions, as described in US 4089941, US 4233187, UK 1513544 and French 2375138. However, increasing catalyst surface area and porosity decreases mechanical strength and therefore such processes have so far depended on catalysts in which such requirements have been met to a degree based on compromise.

In the present invention a better compromise can be arrived at by deriving mechanical strength from a low pore volume "primary" support and catalytic activity from a coating thereon of a sufficiently high surface area porous "secondary" support. The result is at least one of increased geometric surface and thus catalytic activity, decreased pressure drop and decreased content of active material.

It has been proposed to use a catalyst in the form of hollow cylindrical units with internal reinforcing partitions in the treatment of internal combustion engine exhaust gas. Such units are commonly monolithic as disclosed in DE—A—2359451 (GB—A—1444946) but may be in the form of small tubular structures as disclosed in DE—A—2418403 (GB—A—1474553).

According to the invention a process for producing a gas containing hydrogen by reacting in the gaseous phase a hydrocarbon, hydrocarbon derivative or carbon monoxide with steam and/or, where appropriate, carbon dioxide is carried out in the presence of a catalyst in the form of hollow pieces having walls 0.5 to 3 mm thick and is characterised in that each piece comprises a primary support having a pore volume less than 0.3 $cm^3g^{-1}$ and a surface area less than 10 $m^2g^{-1}$ and a secondary support made of refractory oxidic material having a pore volume greater than 0.3 $cm^3g^{-1}$ and surface area 15—300 $m^2g^{-1}$.

1. The hydrogen producing reactions are:

$$CH_4+H_2O \rightarrow CO+3H_2$$

$$"CH_2"+H_2O \rightarrow CO+2H_2$$

("$CH_2$" represents hydrocarbons higher than methane, for example normally gaseous hydrocarbons and normally liquid hydrocarbons boiling at up to 200°C). The analogous reactions with carbon dioxide.

$$CH_4+CO_2 \rightarrow 2CO+2H_2$$

$$"CH_2"+CO_2 \rightarrow 2CO+H_2$$

can be carried out separately or with the steam reaction.

These reactions are strongly endothermic and the process is especially suitable when they are carried out with external heating as in tubular reforming. Alternatively the heat can be supplied by heating the reactants and passing them over the catalyst in an adiabiatic bed or in a hybrid process in which oxygen is a reactant, so that heat evolved in oxidation is absorbed by the endothermic reactions. The hybrid process can be applied to the product of the tubular or adiabatic process that is, in "secondary reforming", or to fresh feedstock ("catalytic partial oxidation"). Commonly these reactions are accompanied by the shift reaction

$$CO+H_2O \rightarrow CO_2+H_2$$

If the starting hydrocarbon is "$CH_2$" and the temperature is relatively low, the methanation reaction (exothermic) may also occur. However, the process is operated preferably in net endothermic conditions and the hydrogen containing gas produced contains at least 30% v/v of hydrogen on a dry basis. Preferably it contains less than 30, especially less than 10% v/v of methane on a dry basis. For the production of hydrogen-containing synethesis gas, the outlet temperature is preferably at least 600°C to ensure low methane content. The range 750—900°C is of general application for making synthesis gas for ammonia or methanol production. As extremes, the temperature is normally up to 950°C, but possibly up to 1100°C for the production of metallurgical reducing gas or down to 700°C for the production of town gas. For the hybrid process using oxygen the temperature may be as high as 1300°C in the hottest part of the catalyst bed.

For these reactions the catalyst usually comprises metallic nickel and/or cobalt. The pressure is typically in the range 1—50 bar abs. but pressures up to 120 atm abs. are proposed. An excess of

steam and/or carbon dioxide is normally used, especially in the range 1.5 to 6, for example 2.5 to 5, mols of steam per atom of carbon in the starting hydrocarbon.

2. Of a hydrocarbon derivative: the most important reaction is methanol decomposition

$$CH_3OH \rightarrow CO + 2H_2$$

$$CH_3OH + H_2O \rightarrow CO_2 + 3H_2 \text{ (or analogously with } CO_2\text{)}$$

The reaction of ethanol or isobutyraldehyde with steam to produce a hydrogen-containing gas has been proposed for industrial operation. Usually the hydrocarbon derivative is an aliphatic alcohol, ether, ester or amine and its boiling point is not over 200°C. The catalyst is for example zinc oxide/chromium oxide or metallic copper on a support such as zinc oxide with possibly a difficultly reducible oxide, if a gas of low methane content is required and the outlet temperature is to be under 500°C. The reaction may be accompanied by methanation of the carbon oxides and hydrogen, especially when a town gas or substitute natural gas is to be produced, in which an iron oxide/chromium oxide catalyst or a nickel and/or cobalt is used. The formation of methane can, of course, be limited by operating at a high enough temperature and steam excess, as in the hydrocarbon steam reaction.

3. Of carbon monoxide, by the shift reaction:

$$CO + H_2O \rightarrow CO_2 + H_2$$

as a separate operation applied to a starting stream rich in carbon monoxide or to the product of reaction 1 or 2. The temperature is commonly in the range 200—300°C over a metallic copper containing catalyst or 300—450°C over an iron oxide-chromium oxide catalyst. If sulphur is present in the gas the catalyst can comprise a sulphide of cobalt and/or nickel in combination with a sulphide of molybdenum and/or tungsten and possibly contains also an alkali metal hydroxide or weak acid salt. The steam partial pressure is commonly up to 70 bar but of course below the level of saturation at the operating temperature.

The invention in a second aspect provides the use of such a catalyst in a process of purifying a hydrogen stream of carbon oxides by conversion of such oxides to methane. The carbon oxides content is commonly up to 5, usually under 1.5, % v/v initially. The catalyst is nickel and/or cobalt and/or (less preferably) a platinum group metal. The temperature is typically in the range 300—450°C and the pressure the same as for synthesis gas generation.

In general, since the catalyst pieces can have a high geometric surface, the process is especially advantageous in reaction conditions in which the rate is limited by diffusion.

The primary support pore volume is, when strength is of paramount importance, preferably less than 0.18, especially less than 0.1, for example in the range 0.001 to 0.08 $cm^3g^{-1}$. If a catalyst of greater activity than conventional catalyst is required, the pore volume of the primary support is preferably within the range 0.15 to 0.3 $cm^3g^{-1}$.

The pore volume is defined as the difference between the reciprocal of the "mercury" density and the reciprocal of the "helium" density of the samples. These densities, and the surface area, are determined by the following methods which are applied to samples after they have been dried in air at 110°C.

1. Mercury density. The density of the sample immersed in mercury at 20°C and atmospheric pressure is determined after allowing 15 minutes for the system to equilibrate. This measurement represents the density of the solid containing pores not penetrated by mercury, i.e. pores of radius smaller than about $7.5 \times 10^4$ Angstrom units.
2. Helium density. The density of the sample immersed in helium at room temperature is determined: this represents the density of the ultimate solid material.
3. Surface area. This is determined (after degassing the sample in flowing nitrogen for 40 minutes at 150°C) by the method of Brunauer, Emmett, and Teller (JACS, *60*, 309 (1938)) by measuring the quantity of nitrogen absorbed on the sample at the boiling point of liquid nitrogen: in calculating the surface area, the cross-sectional area of the nitrogen molecule is taken as 16.0 square Angstrom units.

The required low pore volume of the primary support is attained by calcination, for example at a temperature in the range 1300—1800°C when alumina is used.

The surface area of the primary support is preferably less than 10, especially in the range 0.01 to 2.0, especially 0.05 to 1.0 $m^2g^{-1}$.

In the ensuing description, percentage compositions of the catalyst are by weight calculated on the constituents non-volatile in air at 900°C of the catalyst precursor in which the catalytic metals are present as monoxides.

The secondary support pore volume is greater than 0.3, especially in the range 0.4—0.8 $cm^3g^{-1}$. Its surface area is in the range 15—300 especially in the range 50—200 $m^2g^{-1}$. When the surface area

is over 50 $m^2g^{-1}$ in freshly made catalyst it may decrease during process operation, but not greatly, especially when a grain growth inhibitor is present, as will be described below. The secondary support preferably has a thickness of 0.005 to 1 mm, particularly 0.01 to 0.1 mm. A plurality of coats of the secondary support material may be applied to build up the desired thickness of the secondary support. Typically the secondary support constitutes 0.5 to 30% w/w of the total catalyst.

A very suitable secondary support contains oxide in 2 or more forms, partly derived from a highly dispersed colloidal form and the remainder from a flocculated powder form. The colloidal and flocculated powder oxides can be the same or different: in particular colloidal alumina can be present along with a different alumina or with one or more different oxides. The weight ratio of colloidal material to such other material is suitably in the range 0.05 to 5.0.

The hollow catalyst pieces are sufficiently concave in shape—for example having the cross sectional shape of an "O" or "C" or "U" or "V"—to limit the extent to which one piece can block access of reactant to another piece. Preferably the pieces are hollow cylinders, very suitably having transverse internal partitions. The number of partitions, if projecting radially inwardly of the vessel wall, is preferably at least 3, especially in the range 4 to 7, and is preferably odd. The partitions can alternatively be chordal; they need not be equally spaced. There can be projections external of the cylinder walls, instead of or in addition to the internal partitions.

In a preferred class of shapes the passages are defined by partitions having a chordal cross section, preferably non-radial. This class includes hollow cylinders having as cross section a circle having at least one inscribed polygon having up to 6 sides, for example a square or equilateral triangle or 2 equilateral triangles in symmetrical superimposition. In another preferred class of hollow cylinders the passages are disposed in a pattern which in cross section in a plane perpendicular to the cylinder axis is a set of chords intersecting one another in pairs at points distanced from the circumference and from the centre of the circle.

In the latter class the number of chords is preferably up to 8 and preferably they are equal in length, so that they define a regular polygon having the same centre as the circle. Very suitably there are 3, 4 or 5 chords. The resulting cross section includes area of three different types:

(a) bounded by part chords only, thus forming the central polygon;
(b) bounded by three part-chords and one arc, along the sides of the polygon; and
(c) bounded by two part-chords and one arc, at the corners of the polygon.

When the type (c) areas are smaller than the type (b) areas, they can be closed, in order to make it easier to manufacture the shapes. When the type (a) or (b) areas are small, however, there appears to be no advantage in closing them. Preferably the areas of the (a) and (b) types do not differ by more than 50%.

The geometric surface of the shapes is typically at least 400 $m^2$ per $m^3$.

Especially when the process is to be operated with heat exchange during chemical reaction, as in the externally heated steam hydrocarbon reaction, the hollow cylinders have at least one channel forming face, the depth of the channels made available by the channel forming face should be at least equal to the depth of the laminar sublayer of fluid that will be present during operation of the process for which the contact material is to be used. (The laminar sublayer is defined in "Boundary Layer Theory" by H. Schlichtung, McGraw-Hill, New York, 7th edition 1979, pages 602—604). The depth of the laminar sublayer depends on temperature, pressure, fluid composition and fluid flow rate and thus in particular a different minimum channel depth could be prescribed for each set of conditions. For a wide range of applicability, however, a shape having at least one surface that chordally in contact with a cylindrical surface of 50 mm radius defines a channel cross section of greater area than the corresponding straight chord, can be used. Such a face preferably is generally flat in at least one dimension but formed with at least one projection of a height in the range 0.3 to 3.0 mm, especially 0.8 to 2.0 mm, and positioned so as to extend beyond an arc of 50 mm radius.

As examples of channel forming faces there may be mentioned:

(a) end faces protrusioned, grooved or stepped;
(b) when the hollow cylinder has more than one through passage, one or more projections formed on one or more of the walls separating the passages;
(c) circumferential wall formed with one or more flanges.

The catalyst pieces preferably are small compared with the dimensions of the catalyst bed to be charged therewith. (By "small" we mean having at least one dimension less than 0.25, especially less than 0.15, of the catalyst bed average width). For a wide range of processes they are typically 5—50 mm in outer diameter and height. For the hydrocarbon steam reaction in externally heated tubes of up to 150 mm diameter, these dimensions are respectively 10—20 and 6—12 mm. Correspondingly larger pieces can be used in wider tubes, such as are employed in specialised forms of the process. The thickness of the walls of the hollow pieces, whether external or internal is preferably in the range 1—2 mm.

The primary support is any suitable refractory material and is preferably alumina, particularly alpha-alumina, aluminosilicate, magnesia-alumina spinel, calcium aluminate cement, cordierite, zirconia, titania, or combinations thereof. If the primary support is mainly alumina, it can contain over 2, e.g. up to 30% w/w, of oxides other than alumina.

The secondary support can comprise any oxidic material known as a support for a catalyst for the reaction to be carried out. Typically it comprises alumina, particularly gamma- or eta-alumins, and this is especially preferred when the primary support is or contains alumina, particularly alpha-alumina. Other sesquioxides, for example, chromia and rare earth oxides may make up at least part of the secondary support. Other useful secondary support oxides are titania, zirconia, hafnia, thoria, vanadia, urania and oxides of manganese, molybdenum and tungsten.

Preferably the secondary support includes a grain growth inhibitor, for example at least 0.05, especially 0.1 to 5.0%, by weight of one or more rare earth oxides, especially of cerium, yttrium, or praseodymium.

When nickel and/or cobalt are present in the catalyst, it is expected that the secondary support, if it contains a sesquioxide, will include, at least after a period of process operation, some nickel and/or cobalt spinel. It is within the invention to have the secondary support material at least partly in the form of spinel, whether of nickel and/or cobalt or of a divalent metal having a difficultly reducible oxide, especially magnesium or manganese or, less preferably, zinc. Since nickel and/or cobalt present as spinel is in a reduction-resistant oxidic form, it does not contribute significantly to the activity of the catalyst: active nickel and/or cobalt are additional thereto.

When the catalytic metal is to be copper, the secondary support preferably includes zinc oxide and preferably also one or more of boria, alumina, chromia, rare earth oxides, vanadia and manganese oxide.

In a catalyst comprising nickel and/or cobalt there may also be present one or more platinum group metals, which are capable of increasing the activity of the nickel and/or cobalt and of decreasing the tendency to carbon lay-down when reacting steam with hydrocarbons higher than methane. Further, the catalyst, especially in preferred forms, can contain a platinum group metal but no non-noble catalytic component. Such a catalyst is more suitable for the steam/hydrocarbon reaction than one containing a platinum group metal on a conventional support because a greater fraction of the active metal is accessible to the reacting gas.

For the hydrocarbon steam reaction the catalyst contains (calculated as monoxide) typically 0.2 to 35, especially 1 to 25% w/w of nickel and/or cobalt. Within this range 0.5 to 8.0, especially 1 to 6 or even 1 to 4% w/w is preferred. This is generally less than has been proposed for catalysts of this type in which only one type of alumina support is present.

The specific surface of the catalytic metal is suitably in the range 0.1 to 50 $m^2/g$ of catalyst. Within these ranges the larger areas are preferred for reactions under 600°C.

The catalyst can be made by applying a compound of the active metal and the secondary support together to the primary support. In a preferred method, the secondary support is applied to the primary support, the combination is preferably calcined, and then a solution containing a thermally decomposable compound of active metal is applied. In order to obtain a large enough content of active metal, several applications of such a solution, each followed by drying and thermal decomposition, may be made. Oxides can be produced *in situ* in the secondary support by oxidation of powdered metal or thermal decomposition of an oxy salt such as a nitrate. Other methods, such as deposition from the vapour phase can be used.

A preferred method of making the catalyst comprises forming a colloidal dispersion of the secondary support material, for example by acid-peptisation and preferably also de-ionisation, suspending further support material in the dispersion, applying the suspension to the primary support and calcining it to effect adhesion and adjust the surface area of the secondary support. Any grain growth inhibitor is preferably added with the dispersion or suspension. The suspension can be caused to gel before calcination. It may, if desired, contain a soluble surfactant or polymer.

The method involving thermal decomposition of an oxy salt has also given excellent results and is especially preferred when a grain growth inhibiting oxide is to be present, apparently because the secondary support oxide and inhibiting oxide are deposited together.

To improve adhesion of the secondary support to the primary support the external surface of the primary support can be modified to increase its adsorptive area before applying the secondary support. Ways of doing this include the following:

(a) mechanical abrasion, for example by rolling in abrasive powder;
(b) etching by a liquid, for example alkali, ammonia, amines, strong acid, complex-forming acid (such as HF, citric acid, other hydroxy or polybasic acids), chelating agent (such as EDTA salt or acetylacetone);
(c) etching by a gas, for example a carrier gas containing a volatile base or acid.

If desired two or all three ways can be used together. It appears that whereas such treatments may remove material from the surface, it suffices if they render the surface hydrated or hydratable.

To demonstrate this, two primary supports were pretreated and then coated with one or both of two alumina dispersions. The first dispersion contained 27 g böhmite (average particle size 2.5 microns) and 0.2 g mixed rare earth oxides (50% $CeO_2$) in 100 ml of water. The coated support was drained, dried and calcined at 1000°C for 6 hours. By X-ray diffraction the coating was shown to

consist of delta and theta alumina. This operation was then repeated but using a more concentrated coating mixture made by dispersing 10 g of pseudoböhmite in 100 ml of 0.2% nitric acid and suspending 100 g of the böhmite therein. The major alumina phase present was alpha. For some samples only the second mixture was used. In each run the pretreatment consisted in dipping in an acid or alkaline solution at 50°C for 20 minutes and drying at 130°C for 0.5 h.

The substrates used were:

*A*: ceramic rings with internal partitions.

*B*: alpha alumina open rings.

The gains in weight are shown in Table 1.

TABLE 1

| Substrate | Treatment | Gain in weight % w/w | |
|---|---|---|---|
| | | First coating | Second coating |
| A | None | 3.0 | 15.8 |
| | | not used | 10.9 |
| | aq. $NH_3$ | 3.9 | 17.5 |
| | | not used | 10.3 |
| | conc $HNO_3$ | 4.3 | 12.3 |
| | | not used | 10.7 |
| B | None | 0.2 | 7.7 |
| | aq. $NH_3$ | 0.3 | 10.4 |

The coatings on the pre-treated primary supports showed especially good adhesion and uniformity.

Example 1

(a) The primary support was fired aluminosilicate extruded rings of 8 mm outside diameter, 1 mm wall thickness and 8 mm height, having properties as follows:

| | |
|---|---|
| Surface area | 0.1 $m^2\ g^{-1}$ |
| Helium density | 2.51 g $cm^{-3}$ |
| Mercury density | 2.49 g $cm^{-3}$ |
| Pore volume | 0.004 $cm^3\ g^{-1}$ |

The coating material for the secondary support was prepared as follows:

Alumina hydrate (600 g) was added to dilute nitric acid (2200 ml of 0.14 M acid) and stirred vigorously for 4 hours at room temperature. The resulting sol was deionised by dialysis through the walls of a cellulose acetate container surrounded by deionised water. To a 150 ml sample of deionised sol was added 300 g of the same alumina. This was followed by 10 ml of non-ionic wetting agent and 2.25 g of cerium nitrate in 10 ml of water, and then water was stirred in to bring the total volume to 1.2 litres, corresponding to about 30% of $Al_2O_3$.

500 g of the primary support rings were given two coats of the coating mixture, each coat being applied by allowing the rings to stand in the coating mixture for 20 minutes followed by draining and drying at 55°C. The coated rings were calcined for 1 hour at 700°C after each coat.

The weight of the calcined secondary support was 0.6% of the combined primary and secondary supports. The secondary support had a surface area of about 150 $m^2\ g^{-1}$.

The rings bearing the calcined secondary support were then dipped into an aqueous solution of nickel nitrate (1000 g $l^{-1}$ of $N_1(NO_3)_2 . 6H_2O$) for 5 minutes, drained, dried at 120°C and calcined for 7 hours at 450°C. This procedure was repeated to give a catalyst precursor A having a nickel content (expressed as NiO) of 0.7% by weight.

A 500 ml charge of it was placed in a 250 mm long 50 mm internal diameter tube equipped for external electric heating. A preheated (400°C) mixture of desulphurised natural gas (vol % 91 $CH_4$, 3.5 $C_2H_6$, $2N_2$) and steam (ratio 1:3) was passed through at a volume space velocity of 2000 $h^{-1}$, atmospheric pressure. The catalyst temperature was adjusted to successive levels between 500 and

700°C. Although the catalyst precursor was not reduced before feeding methane and steam to its, its activity developed rapidly.

The methane contents of the exit gas are shown in Table 2.

(b) Example 1a was repeated but the coating of the secondary support material was omitted. Thus the primary support was impregnated (twice) directly with the nickel nitrate solution. The nickel content, expressed as NiO, of the catalyst precursor, B, was 0.8% by weight.

TABLE 2

| Catalyst precursor | Methane content of exit gas (% v/v) at bed exit temperatures of | | | |
|---|---|---|---|---|
| | 500°C | 600°C | 650°C | 700°C |
| A | 19.3 | 7.7 | 5.0 | — |
| B+ | 28.3 | 33.0 | — | 29.0 |

+ comparative

Example 2

The primary support, made by dry compression pelleting of alpha alumina, followed by calcination at 1650°C, had these properties:

| | |
|---|---|
| Cylinder height, mm | 8 |
| outer diameter | 15 |
| wall thickness | 2 |
| inner structure | 7 radial spokes 1 mm thick. |
| Surface area | 0.1 $m^2\ g^{-1}$ |
| Helium density | 3.94 $g\ cm^{-3}$ |
| Mercury density | 3.34 $g\ cm^{-3}$ |
| Pore volume | 0.05 $cm^3\ g^{-1}$ |

The coating mixture for the secondary support was prepared from a dispersible alumina hydrate ("Cerasol"—RTM) having these properties:

| | |
|---|---|
| Composition % | |
| $Al_2O_3$ | 65 |
| $H_2O$ | 35 |
| $Na_2O$ | 0.02 |
| $SiO_2$ | 0.01 |
| $Fe_2O_3$ | 0.02 |
| Crystallite size | about 70 Angstrom units |
| Crystal structure | böhmite |
| Helium density | 2.78 $g\ ml^{-1}$ |
| Hg density | 1.56 $g\ ml^{-1}$ |
| pore volume | 0.28 $ml\ g^{-1}$ |

This alumina hydrate (150 g) was stirred vigorously with 1100 g of water for 4 hours at room temperature. To the resulting sol was added 300 g of the same alumina, followed by 5 ml of non-ionic wetting agent and 9.7 g cerium nitrate in 50 ml of water, and then the mixture was stirred for 2 hours.

A sample (757 g) of primary support was immersed in this suspension for 20 minutes allowed to drain, dried at 50°C and calcined at 1000°C for 1 hour. The coated support then carried 0.63% of alumina. To obtain a thicker coating this operation was repeated twice, giving 3.2% of alumina. The secondary support alumina had a surface area 100 $m^2\ g^{-1}$ and a pore volume substantially greater than before calcination.

A sample of coated support was immersed for 20 minutes in a nickel nitrate solution containing 20 g of nickel (as metal) per 100 ml, allowed to drain for 30 minutes, dried for 2 hours at 120°C and calcined at 450°C for 4 hours. This procedure was repeated twice. The resulting precursor contained 4.4% nickel oxide NiO, and had a mean horizontal crushing strength of 125 kg (range 95—175).

The catalyst precursor was tested for activity as described in Example 1, steamed for 16 hours at 760°C, then tested again. A comparison catalyst of the same general shape but differing in the following properties was tested in the same way:

| | |
|---|---|
| Dimensions, mm: | |
| height | 9.0 |
| outer diameter | 16.8 mm |
| wall thickness | 2.0 mm |
| inner structure | 1.5 mm |
| Secondary support: | none |
| Surface area | 1.7 $m^2 g^{-1}$ |
| Helium density | 4.04 g $cm^{-3}$ |
| Mercury density | 2.51 g $cm^{-3}$ |
| Pore volume | 0.15 $cm^3 g^{-1}$ |
| NiO content | 10.0% w/w |
| Mean horizontal crushing strength | 36 kg (range 20—50). |

(The support was in fact the primary support of the invention catalyst, but before calcination at 1650°C.)

The results are shown in Table 3).

TABLE 3

| Temperature °C | Outlet methane % v/v on dry basis | | | |
|---|---|---|---|---|
| | Invention | | Comparison | |
| | initial | steamed | initial | steamed |
| 550 | 25.3 | 23.7 | 20.2 | ca 90 |
| 600 | 15.9 | 13.4 | 9.4 | ca 90 |
| 650 | 8.3 | 7.4 | 5.4 (665°C) | ca 90 |
| 700 | 4.2 | 3.9 | 2.1 (710°C) | 1.4 |
| 760 | 2.2 | 1.5 | 1.0 | 1.0 |

It is evident that the new catalyst is only slightly less active than the comparison, despite its much lower nickel content, and has much more stable low temperature activity.

Similar results were obtained using a catalyst made from a dispersion containing a soluble hydroxyethyl cellulose instead of the wetting agent.

Example 3

(a) A primary support (500 g) similar to that of Example 2 but having a surface area of 0.3 $m^2 g^{-1}$ and pore volume 0.06 $cm^3 g^{-1}$ was coated with secondary support by dipping for 10 minutes in a solution of aluminium nitrate nonahydrate (375 g), cerium nitrate hexahydrate (0.5 g) and water (10 g) at 85—90°C. The support was then drained, dried overnight at 50°C and calcined at 1000°C for 1 hour. This procedure was repeated once and the resulting secondary support content was 3% w/w. It was impregnated with nickel nitrate solution (20 g Ni per 100 ml), drained, dried at 120°C and calcined at 450°C for 6 hours. This procedure was repeated, giving a nickel content of 2.1% as NiO.

(b) The operations of paragraph (a) were repeated subject to the change that 3 coatings of alumina/ceria were made, the second and third being calcined at 800°C for 1 hour. The secondary support content was 3.3% w/w and the NiO content 3.5%.

(c) A sample of the coating solution was dried and then calcined at 800°C for 1 hour. The resulting oxide mixture had these properties:

| | |
|---|---|
| Crystallography: | gamma+eta alumina |
| Surface area | 122 $m^2 g^{-1}$ |
| Helium density | 2.96 g $cm^{-3}$ |
| Mercury density | 1.18 g $cm^{-3}$ |
| Pore volume | 0.52 $cm^3 g^{-1}$ |

The above catalyst precursors were tested as described in Example 1 and the results are shown in Table 4.

TABLE 4

| Temperature °C | Outlet methane content % v/v on dry basis | | | |
|---|---|---|---|---|
| | a | | b | |
| | initial | steamed | initial | steamed |
| 500 | 25.3 | NA | 26.2 | NA |
| 550 | 20.2 | NA | 21.8 | NA |
| 600 | 8.7 | NA | 12.4 | 12.8 |
| 650 | NA | 10.5 | 7.1 | 8.0 |
| 700 | 3.5 | 5.9 | 6.5 | 5.8 |
| 760 | 1.9 | 2.9 | 2.4 | 2.1 |

It is evident that the activity and stability of the catalyst are about the same as for that of the preceding Example.

Example 4

Example 2 was repeated using a primary support of generally similar overall dimensions, composition and micromeritics, but having as its inner structure a set of partitions having the cross-sections of two pairs of mutually parallel chords, each pair perpendicular to the other pair. These chords defined a central square of 2.6 mm side. Three alumina applications were made, giving 4.6% w/w of secondary support. Three nickel nitrate applications were made, giving an Ni content of 5.2%.

The resulting catalyst had a geometric surface area of 600 $m^2\ cm^{-3}$, which is more than double the value (284) for conventional steam reforming catalysts rings, yet exerted a pressure drop 5% less than that of conventional catalyst in the form of rings 17 mm outer diameter, 17 mm high, with a single hole 7 mm in diameter.

It was tested by the method described in Example 1 at 600°C and above and found to give the following percentage conversion of methane:

| Temperature °C | 600 | 650 | 700 | 760 |
|---|---|---|---|---|
| Initial | 88 | 92 | 97 | 98 |
| After 16 hours steaming at 760°C | 84 | 90 | 96 | 97 |

After 100 hours reaction at 760°C the activity was unchanged.

In a further test, in a 100 mm internal diameter reformer tube at 700°C outlet temperature, 11 bar abs pressure and steam ratio 4.2 the outlet methane content averaged 2.5% v/v over 45 days, as compared with 3.8% using the conventional catalyst, despite a 5% greater flow rate through the invention catalyst.

## Claims

1. A process for producing a gas containing hydrogen by reacting in the gaseous phase a hydrocarbon, hydrocarbon derivative or carbon monoxide with steam and/or, where appropriate, carbon dioxide, in the presence of a catalyst in the form of hollow pieces having walls 0.5 to 3 mm thick, characterised in that each piece comprises a primary support made of refractory material having a pore volume less than 0.3 $cm^3g^{-1}$ and a surface area less than 10 $m^2g^{-1}$ and a secondary support made of refractory oxidic material having a pore volume greater than 0.3 $cm^3g^{-1}$ and an internal surface area in the range 15—300 $m^2g^{-1}$.

2. A process according to claim 1 in which the pore volume of the primary support of the catalyst is less than 0.18 $cm^3g^{-1}$.

3. A process according to claim 1 or claim 2 in which the surface area of the primary support of the catalyst is in the range 0.01 to 2.0 $m^2g^{-1}$.

4. A process according to any one of the preceding claims in the presence of a catalyst in which adhesion of the secondary support to the primary support has been improved by increasing the external adsorptive area of the primary support before applying the secondary support.

5. A process according to any one of the preceding claims in which the surface area of the secondary support of the catalyst is in the range 50 to 200 $m^2g^{-1}$.

6. A process according to any one of the preceding claims in the presence of a catalyst in the form of hollow cylinders having 5 to 7 inwardly projecting radial partitions.

7. A process according to any one of claims 1 to 5 in the presence of a catalyst in the form of hollow cylinders each having a plurality of through passages defined by partitions disposed in a pattern which in cross section in a plane perpendicular to the cylinder axis is a set of chords intersecting one another in pairs at points distanced from the circumference and from the centre of the circle.

8. A process according to any one of the preceding claims in which the secondary support of the catalyst comprises 0.1 to 5.0% w/w of an oxide of a rare earth metal.

9. A process according to any one of the preceding claims starting from a hydrocarbon, in which the active material of the catalyst is nickel and/or cobalt and is present to the extent of 1 to 6% w/w calculated as monoxide.

10. A process of purifying a hydrogen stream containing up to 5% v/v carbon oxides by conversion thereof to methane at a temperature in the range 300—450°C in the presence of a supported catalyst comprising nickel and/or cobalt as active metal characterised in that the catalyst is in the form of hollow pieces having walls 0.5 to 3 mm thick, each piece comprising a primary support having a pore volume less than 0.3 $cm^3g^{-1}$ and a surface area less than 10 $m^2g^{-1}$ and a secondary support made of refractory oxidic material having a pore volume greater than 0.3 $cm^3g^{-1}$ and an internal surface in the range 15—300 $m^2g^{-1}$.

**Patentansprüche**

1. Verfahren zur Herstellung eines wasserstoffhaltigen Gases durch Umsetzung eines Kohlenwasserstoffs, eines Kohlenwasserstoffderivats oder von Kohlenmonoxid mit Dampf und/oder, falls dies zweckmäßig ist, mit Kohlendioxid in der Gasphase in Gegenwart eines Katalysators in Form von Hohlkörpen mit 0,5 bis 3 mm dicken Wänden, dadurch gekennzeichnet, daß jeder Hohlkörper einen primären Träger, der aus feuerfestem Material mit einem Porenvolumen von weniger als 0,3 $cm^3g^{-1}$ und einer spezifischen Oberfläche von weniger als 10 $m^2g^{-1}$ hergestellt ist, und einen sekundären Träger, der aus feuerfestem, oxidischem Material mit einem Porenvolumen von mehr als 0,3 $cm^3g^{-1}$ und einer inneren spezifischen Oberfläche in dem Bereich von 15 bis 300 $m^2g^{-1}$ hergestellt ist, enthält.

2. Verfahren nach Anspruch 1, bei dem das Porenvolumen des primären Trägers des Katalysators weniger als 0,18 $cm^3g^{-1}$ beträgt.

3. Verfahren nach Anspruch 1 oder 2, bei dem die spezifische Oberfläche des primären Trägers des Katalysators in dem Bereich von 0,01 bis 2,0 $m^2g^{-1}$ liegt.

4. Verfahren nach einem der vorhergehenden Ansprüche in Gegenwart eines Katalysators, bei dem die Haftung des sekundären Trägers an dem primären Träger durch Vergrößerung der äußeren Adsorptionsfläche des primären Trägers vor dem Aufbringen des sekundären Trägers verbessert worden ist.

5. Verfahren nach einem der vorhergehenden Ansprüche, bei dem die spezifische Oberfläche des sekundären Trägers des Katalysators in dem Bereich von 50 bis 200 $m^2g^{-1}$ liegt.

6. Verfahren nach einem der vorhergehenden Ansprüche in Gegenwart eines Katalysators in Form von Hohlzylindern mit 5 bis 7 nach innen vorspringenden radialen Trennwänden.

7. Verfahren nach einem der Ansprüche 1 bis 5 in Gegenwart eines Katalysators in Form von Hohlzylindern, wobei jeder Hohlzylinder eine Vielzahl von Durchgängen aufweist, die durch Trennwände abgegrenzt sind, die in einem Muster angeordnet sind, das im Querschnitt in einer zu der Zylinderachse senkrechten Ebene eine Gruppe von Sehnen ist, die sich paarweise in Punkten, die mit Abstand von dem Umfang und dem Mittelpunkt des Kreises angeordnet sind, schneiden.

8. Verfahren nach einem der vorhergehenden Ansprüche, bei dem der sekundäre Träger des Katalysators 0,1 bis 5,0% (Gew./Gew.) eines Oxids eines Seltenerdmetalls enthält.

9. Verfahren nach einem der vorhergehenden Ansprüche, das von einem Kohlenwasserstoff ausgeht und bei dem das aktive Material des Katalysators Nickel und/oder Kobalt ist und bis zum Betrag von 1 bis 6% (Gew./Gew.), als Monoxid berechnet, vorhanden ist.

10. Verfahren zur Reinigung eines bis zu 5% (Vol./Vol.) Kohlenstoffoxide enthaltenden Wasserstoffstroms durch deren Umwandlung in Methan bei einer Temperatur in dem Bereich von 300 bis 450°C in Gegenwart eines Trägerkatalysators, der als aktives Metall Nickel und/oder Kobalt enthält, dadurch gekennzeichnet, daß der Katalysator die Form von Hohlkörpern mit 0,5 bis 3 mm dicken Wänden hat, wobei jeder Hohlkörper einen primären Träger mit einem Porenvolumen von weniger als 0,3 $cm^3g^{-1}$ und einer spezifischen Oberfläche von weniger als 10 $m^2g^{-1}$ und einen sekundären Träger, der aus feuerfestem, oxidischem Material mit einem Porenvolumen von mehr als 0,3 $cm^3g^{-1}$ und einer inneren spezifischen Oberfläche in dem Bereich von 15 bis 300 $m^2g^{-1}$ hergestellt ist, enthält.

**Revendications**

1. Procédé pour produire un gaz contenant de l'hydrogène par réaction en phase gazeuse d'un

hydrocarbure, d'un dérivé d'hydrocarbure ou de monoxyde de carbone avec de la vapeur d'eau et/ou, suivant ce qui convient, du dioxyde de carbone, en présence d'un catalyseur sous la forme de corps creux présentant des parois d'une épaisseur de 0,5 à 3 mm, caractérisé en ce que chaque corps comprend un support primaire fait de matière réfractaire ayant un volume des pores inférieur à 0,3 $cm^3g^{-1}$ et une surface spécifique inférieure à 10 $m^2g^{-1}$, et un support secondaire fait de matière oxydique réfractaire ayant un volume des pores supérieure à 0,3 $cm^3g^{-1}$ et une surface spécifique de l'intervalle de 15—300 $m^2g^{-1}$.

2. Procédé suivant la revendication 1, dans lequel le volume des pores du support primaire du catalyseur est inférieur à 0,18 $cm^3g^{-1}$.

3. Procédé suivant la revendication 1 ou 2, dans lequel la surface spécifique du support primaire du catalyseur est située dans l'intervalle de 0,01 à 2,0 $m^2g^{-1}$.

4. Procédé suivant l'une quelconque des revendications précédentes en la présence d'un catalyseur dans lequel l'adhérence du support secondaire au support primaire a été améliorée par augmentation de la surface d'adsorption extérieure du support primaire avan l'application du support secondaire.

5. Procédé suivant l'une quelconque des revendications précédentes, dans lequel la surface spécifique du support secondaire du catalyseur est située dans l'intervalle de 50 à 200 $m^2g^{-1}$.

6. Procédé suivant l'une quelconque des revendications précédentes en la présence d'un catalyseur ayant la forme de cylindres creux comportant 5 à 7 cloisons radiales en saillie vers l'intérieur.

7. Procédé suivant l'une quelconque des revendications 1 à 5 en la présence d'un catalyseur ayant la forme de cylindres creux dont chacun comporte plusieurs passages de part en part définis par des cloisons disposées suivant un motif qui, en coupe suivant un plan perpendiculaire à l'axe du cylindre, figure un ensemble de cordes se recoupant les unes les autres par paires en des points situés à l'écart de la circonférence et à l'écart du centre du cercle.

8. Procédé suivant l'une quelconque des revendications précédentes, dans lequel le support secondaire du catalyseur comprend 0,1 à 5,0% p/p d'un oxyde d'un métal des terres rares.

9. Procédé suivant l'une quelconque des revendications précédentes au départ d'un hydrocarbure, dans lequel l'agent actif du catalyseur est le nickel et/ou le cobalt et est présent à raison de 1 à 6% p/p, à calculer en monoxyde.

10. Procédé pour purifier un courant d'hydrogène contenant jusqu'à 5% v/v d'oxydes de carbone par conversion de ceux-ci en méthane à une température de l'intervalle de 300—450°C en présence d'un catalyseur sur support contenant du nickel et/ou du cobalt comme métal actif, caractérisé en ce que le catalyseur se présente sous la forme de corps creux présentant des parois d'une épaisseur de 0,5 à 3 mm, chaque corps comprenant un support primaire ayant un volume des pores inférieur à 0,3 $cm^3g^{-1}$ et une surface spécifique inférieure à 10 $m^2g^{-1}$ et un support secondaire fait de matière oxydique réfractaire ayant un volume des pores supérieur à 0,3 $cm^3g^{-1}$ et une surface interne de l'intervalle de 15—300 $m^2g^{-1}$.